# EUROPEAN PATENT SPECIFICATION

(11) **EP 2 541 720 B1**
(45) Date of publication and mention of the grant of the patent: **22.08.2018**
(21) Application number: 11382218.3
(22) Date of filing: 29.06.2011
(51) Int. Cl.: H02J 3/50, H02J 3/32

(54) **Procedure for supply control and storage of power provided by a renewable energy generation plant**
Verfahren zur Bereitstellung der Regelung und Speicherung von Energie, der von einem Kraftwerk für erneuerbare Energien bereitgestellt wird
Procédé pour le contrôle de l'alimentation et le stockage de l'énergie fournie par une centrale de génération d'énergie renouvelable

(43) Date of publication of application: 02.01.2013
(73) Proprietor: Acciona Energía, S.A., 31621 Sarriguren (Navarra) (ES)
(72) Inventor: Marroyo Palomo, Luis, 31006 PAMPLONA (ES); Marcos Álvarez, Javier, 31006 Pamplona (ES); Padros Razquin, María Asunción, 31621 Sarriguren (ES); Rabal Echeverria, Daniel, 31621 Sarriguren (ES); Cuesta Lerin, David, 31621 Sarriguren (ES); Berazaluce Minondo, Iñigo, 31621 Sarriguren (ES); Walti, Christopher, Chicago, IL 60606 (US)
(74) Representative: Pons

(56) References cited:
- EP-A1- 2 328 259
- WO-A1-2011/075062
- WO-A2-2011/053408
- US-A- 5 274 571
- US-A1- 2003 047 209
- US-A1- 2006 276 938
- US-A1- 2008 040 295

## Description

### OBJECT OF THE INVENTION

The present invention belongs to the field of energy generation and distribution, and more specifically to the regulation and optimization of the electrical energy distribution networks in the presence of renewable sources.

The main object of the present invention is a supply and accumulation control process of electrical energy provided by a renewable plant to the network, for this purpose using a single energy storage unit, such as a battery, which makes it possible to simultaneously provide both capacity sale services and energy sale services, varying the accumulation capacity devoted to each one of said services depending on the operating conditions of the renewable plant (depending on the wind or solar resource conditions) thus maximizing the efficiency and output of the electrical installations.

The simultaneous provision of different services and the capacity assigned to each one of them at any given time is based on the use of weather data to: a) predict the battery requirement of each one of said services; b) predict the energy produced throughout the day and with this define the charging and discharging cycles of the battery; c) establish the services to be offered by the battery.

### BACKGROUND OF THE INVENTION

At present, it is well known that energy accumulator systems and electric batteries can help to improve and optimize the management of electricity networks in various different ways. Mainly, we can think of two different divisions of said battery systems, which are detailed below:
1) Depending on the place where the electricity system is installed, it can be divided as follows:
   1a) Consumption: the batteries which are installed together with energy consumers. The batteries can modify the electrical energy consumption profiles displacing them to the hours with greatest available energy or cheaper energy. They can also help to give more uniform consumption profiles over time to simplify the work of the network managers. In this case, the batteries are operated by the energy consumer so that his electricity bill is as small as possible, bearing in mind the cost of the energy at different hours of the day as possible penalties can be imposed on him.
   1b) Distribution: the batteries can be installed in electricity distribution substations being just another element in their management so that they can absorb fluctuations in production or consumption, or they can be used as energy store in order to have it at peak demand hours. In this case, the batteries are operated by the system managers so that they aid towards the stable operation thereof (for example, helping to control frequency and voltage thereof) as well as reducing costs, avoiding too expensive network support generation systems.
   1c) Generation: energy generation plants can also have accumulator batteries to improve their integration in the electricity network, meeting network operator demands to improve the economic performance of the plants being able to transfer the offer of off-peak hour generation to peak hours. In this case, the batteries are operated by the electricity plant managers to meet the network operator's legislation and maximize their profits from the sale of electricity.
2) Depending on the battery operation mode, it can be divided as follows:
   2a) Capacity for auxiliary network services: the batteries are controlled depending on the status of the electricity network to help its stability. Generally, these services require a power offer producible during a determined time that will be delivered in response to deviations in network parameters. Therefore, the payment tariffs of these services are usually by available power, sometimes complemented by the value of the energy delivered. A typical example is the control of the frequency in the network which will deviate from the rated frequency if the consumption and the production do not match at a certain time, therefore the batteries can offer a power band to deliver or consume from the electricity network so that it reacts helping to equal production and consumption. Another equivalent example is voltage regulation in network nodes through the delivery or consumption of reactive power.
   2b) Energy to optimize generation or consumption: for various reasons, energy prices differ at each hour of the day, and there may also be restrictions in the networks due to saturation. Therefore, batteries can be used to charge them during certain times of the day and discharge them during other times to optimize either the electricity bill or the generation revenue. This use entails a financial profit proportional to the energy delivered by the batteries. In the renewable plants, a typical use of batteries to optimize generation is the stabilization of the energy delivered by the plant avoiding power delivery fluctuations that are too fast which may harm the stability of the electricity network whereto they are connected. Furthermore, the dynamics of this type of use are not always the same. A use to stabilize a consumption or a production variable throughout each hour of the day ("firming") will have cycles in the range of minutes-hours. A use to move off-peak generation to peak generation may have one or two daily cycles. A use to avoid overloads in the network can have a few weekly or even monthly cycles.

Furthermore, a battery system connected to an inverter may supply reactive power as a support to the network voltage independently from the charge status of the battery, only guaranteeing that it does not exceed the current limits in the equipment.

More specifically, a battery with storage capacity of 1 MWh can perform 2 daily cycles: one to load 1 MWh in night off-peak value and transfer it in morning peak hours, and other in the afternoon/evening off-peak hours and transfer it in peak night hours. However, a great potential for use of said battery the rest of the day is lost in performing just 1 or 2 cycles, and its management and operation can be clearly optimized.

The technical problem posed here is that energy accumulator systems and devices are currently designed to perform a single functionality (regulation of the power variations of a plant, regulation of network frequency, movement of energy from off-peak hours to peak hours, etc.), in many cases several batteries with different functions being combined at the same point, with the consequent financial cost entailed.

Typically, in a renewable plant, wherein an accumulator unit is necessary to optimize generation (avoid too fast fluctuations in the energy delivered to the network and/or move energy from certain hours of the day to others due to price or saturation), it will be gauged to the worst condition of the production year and is exclusively devoted to this service. However, as the production costs of the renewable plant are dependent on wind or solar resources and, therefore, are very variable, there are a great number of hours in the year where the accumulator system is underused.

A single accumulator unit will be typically formed by a set of individual systems that are connected in series and in parallel to build the system. Therefore, the set of accumulator units which have a single control unit which manages its joint operation is considered a single accumulator system. It is therefore a logical and not physical unit. A plant which contains several accumulator elements but which are managed from a single central control unit central operates in practice as a single accumulator system. The configuration of each of the system's accumulator elements for a specific service (which can be several different ones) is, therefore, considered as state of the art.

### DESCRIPTION OF THE INVENTION

The present invention resolves the aforementioned drawbacks providing a supply and accumulation control process of electrical energy provided by a renewable energy generation plant according to independent claim 1, which, by the actuation of a single energy accumulator unit, allows the simultaneous provision of capacity sale services (e.g. frequency regulation or voltage regulation), energy sale services (energy transfer from off-peak hours to peak hours, or from hours with saturation of network to hours without saturation), and stabilization services of the renewable plant, with a dynamic assignment of the capacity of the accumulator unit dedicated to each one of these services depending on the weather forecast, thus maximizing the efficiency and output of the electrical installations.

More specifically, the process object of the invention makes it possible to control the supply and accumulation of the electrical energy provided by a renewable energy generation plant comprising: renewable energy generation elements; control and actuation units of the generation elements, which measure the functional parameters of the generation elements and act thereon; at least one energy accumulator unit; and at least one control unit, connected to the control and actuation units of the generation elements, which regulates the energy accumulator unit charging or delivering power depending on the parameters received from the electricity network, depending on the parameters received from the electricity network and on the functional parameters of the generation elements. Furthermore, the adjustment has been provided of the hourly supply program depending on the evolution of the functional parameters of generation in real time, the market values which are given in real time and the production prediction during the following hours. In the event of real time necessity, it is possible to adjust the operation of the renewable plant to support the services given by the energy accumulator unit, for example, forcing the plant to produce or consume reactive power to support voltage regulation, or forcing the plant to vary its active power to support frequency regulation if the accumulator unit cannot comply with desired service during a time.

Preferably, the control process described here additionally comprises introducing in the control unit historic values of energy quantity and power stored or delivered by the energy accumulator unit on previous days with similar weather conditions, in order, with these data, to estimate what is the portion of the energy accumulator unit to be allocated to the stabilization of the power supplied by the plant to the network. Likewise, in accordance with another preferred embodiment, the process further comprises introducing variables regarding market costs of energy and variations in market costs of energy between off-peak hours and peak hours, in the control unit.

Likewise, it has been provided that said variables regarding market costs are entered in the control unit periodically, as they vary, to obtain a new hourly energy supply program in real time for the financial optimization of the energy to be supplied.

In this way, it is possible to establish the most suitable moments so that the energy accumulator unit charges during the off-peak hours and discharges during the peak hours. To carry out this optimization, the penalties imposed due to not providing the previously agreed services must be borne in mind. Therefore, it has been provided that the control process object of the invention additionally comprises the introduction of threshold values of contract demand to be produced, in the control unit. It should be indicated that the penalties that each legislation sets due to breach of the services agreed are intrinsic to the renewable production due to its variability with the weather, which cannot be predicted 100%.

Furthermore, preferably the control process additionally comprises the sending of operating instructions from the control unit to the control and actuation units of the generation elements depending on the hourly energy supply program generated.

The prediction of the energy generated by the plant depending on the weather conditions provides an idea of the variation that may arise in the plant on hourly basis. For example, if we think of a solar plant, a clear day has little production variability and a very accurate prediction, on a par with a high level of energy production. However, a cloudy day may have important variations in plant production, as well as a worse energy prediction thereof. With this information it is possible to build more accurate statistical models which, on hourly basis, make it possible to predict the necessary energy of the accumulator unit to provide the stabilization function of the plant and that available for other functions.

Furthermore, throughout the day it will be necessary to recalculate the use of the available energy in the accumulator unit to provide the different functions, since the reality will almost certainly not be the same as the predictions. The adjustment is calculated based on the production obtained in the plant during the most recent hours, and the production forecast in the coming hours, since the financial calculation of the penalties will not only made based on the function to be performed with the energy available in the accumulator unit, but also on the sale of energy from the plant.

In this way and by way of example, if the energy devoted to the frequency regulation function in the network is greater than that forecast, it can be decided at a determined time to reduce the sale of energy from the plant to the network to further charge the accumulator unit or battery, and thus be able to continue providing frequency regulation services, for example, either because the production exceeds the energy consumption and generation program or because at that time the market tariffs outweigh the execution of said functionality.

We should recall the special characteristic that during the provision of the frequency regulation service only a small percentage of the available power offered by the storage unit is consumed, for which reason it is possible to estimate a use of said unit, less than that offered, if the price prediction models of the aforementioned market are available.

Finally, it has preferably been provided that the hourly energy supply program further comprises the generation of an hourly program of reactive energy supply to the network, depending on the generation capacity available in the generation elements and the accumulator unit. In this way, the energy accumulator unit can provide voltage regulation services in the Network, through the delivery or consumption of reactive power irrespective of the charge status (hereinafter SOC) of said accumulator unit.

Therefore, an energy accumulator unit or battery managed according to the process of the present invention can at all times transfer available energy from one function to another, so that it is feasible to design a greater number of functionalities for a given capacity of said accumulator unit, making it possible to manage the non-performances that arise in the provision of the functions in optimal fashion. This achieves that a renewable plant is always energy producing, also being able to give network services, a service to the plant to improve the quality of the energy delivered to the General Electricity network.

### DESCRIPTION OF THE DRAWINGS

To complement the description being made and in order to aid towards a better understanding of the characteristics of the invention, in accordance with a preferred example of practical embodiment thereof, a set of drawings is attached wherein, with illustrative and non-limiting character, the following has been represented:
Figure 1.- Shows a graphic representing the regulation of a renewable energy plant, for this purpose using an accumulator battery managed according to the process object of the invention.

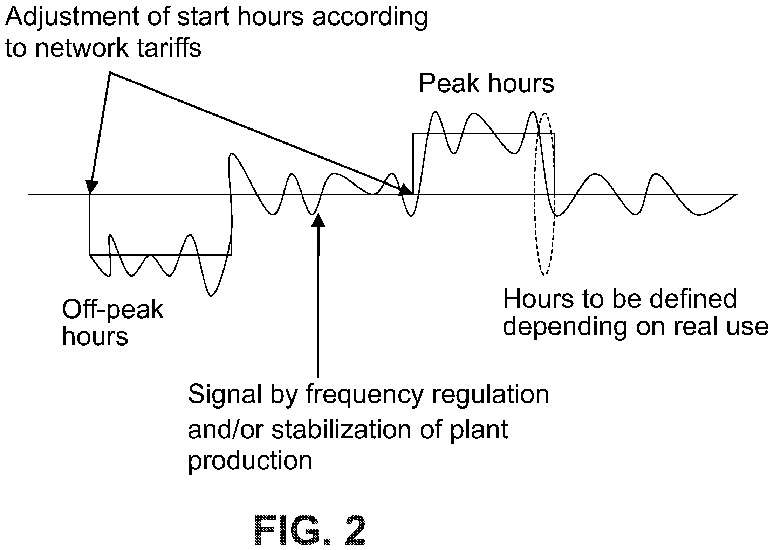

Figure 2.- Shows a graphic representing the off-peak hours and the peak hours of energy consumption during a daily cycle.

### PREFERRED EMBODIMENT OF THE INVENTION

In accordance with a preferred embodiment, the control process of the charging status of a battery, which stores energy produced by a solar photovoltaic plant depending on three sets of parameters, is described below:
- production prediction of the renewable plant, with its different percentiles,
- a statistical model for prediction of the battery capacity necessary to perform the stabilization function of the delivery of power to the network by the solar photovoltaic plant depending on the production prediction thereof (or on the prediction of available solar resources), and
- benchmark market prices of the different services the battery may provide.
Said process consists of the following stages:
- determining the energy necessary to cover energy offer functions in dynamics of seconds (frequency regulation) for each hour of the production day of the solar plant, resorting for this to statistical models based on previous days with similar network conditions, said statistical models being updated on hourly basis,
- determining the necessary energy to cover energy offer functions in intra-hour dynamics (stabilization service of the energy delivered to the network to avoid rapid fluctuations). This energy is determined based on the weather prediction of each operating hour of the day of the solar plant, bearing the following parameters in mind: radiation level with its percentiles of probability of occurrence, temperature, wind speed and cloud level. This prediction is combined with statistical models that reflect the past operation of the solar plant or solar plants with similar dimensions and conditions,
- determining the necessary energy to cover energy offer functions in daily dynamics, (energy transfer from off-peak hours to peak hours, or recovery of Network limitations). For this, it resorts to the data supplied by the Network operator and price models and limitations of similar days and similar network parameters,
- determining the energy quantity of the battery which is going to be used to cover each of the aforementioned functions, and the charging times of the battery with energy produced by the plant,
- calculating economic balances to adjust the energy used to cover each function for an optimum technical or economic value function,
- operating the battery in accordance with the distribution of functions determined for each hour, monitoring in real time compliance with the above calculated cases and adjusting them according to the evolution of the real market and production of the plant knowing the energy available prediction for the following hours.

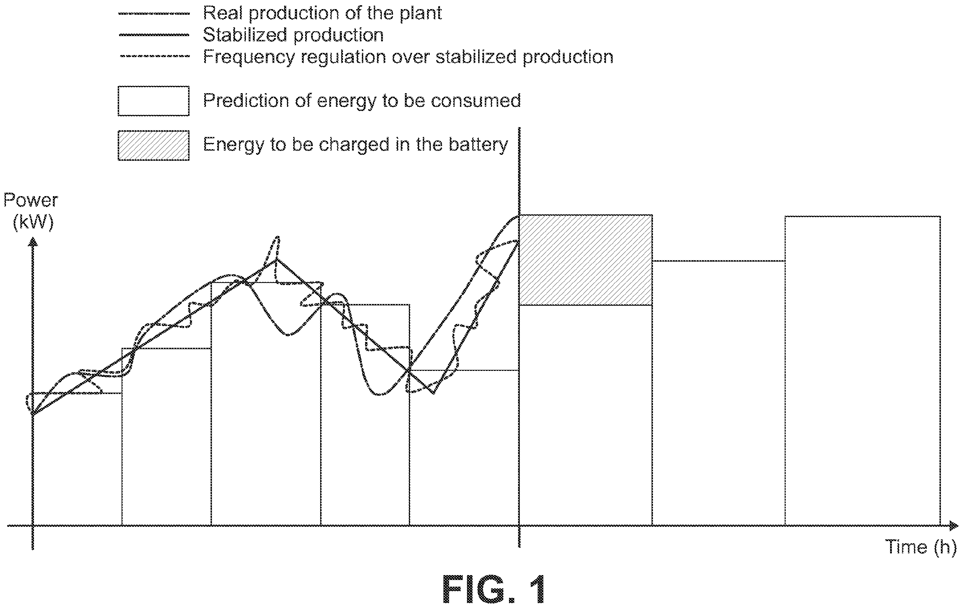

The graphic shown in figure 1 represents the regulation of a solar photovoltaic plant making use of the regulation process described herein.

More specifically, said graphic shows the frequency regulation on the stabilized production curve of the plant. Furthermore, said graphic shows a quadrangular striped section which represents the difference in energy between the forecast energy consumption and the energy produced by the plant, said energy being stored in the battery for its later use during the peak hours of the energy demand.

Finally, we should indicate that instead of a battery any energy storage device can be used, such as, for example, compressed air energy storage (CAES), which is based on the storage of wind power in the subsoil for its later use.

## Claims

1. Supply and accumulation control process of electrical energy provided by a renewable energy generation plant comprising:
- renewable energy generation elements,
- control and actuation units of the generation elements, which measure the functional parameters of the generation elements and act thereon,
- at least one energy accumulator unit formed by a set of individual systems that are connected in series and in parallel, and
- at least one control unit, connected to the control and actuation units of the generation elements, which regulates the energy accumulator unit charging or delivering power depending on the parameters received from the electricity network and on the functional parameters of the generation elements,
wherein the process comprises the phases of:
- determining the values of energy quantity to be produced by the plant during a near future time interval, depending on weather conditions,
- introducing these values of energy quantity, in the control unit,
- generating an hourly programme of energy supply to be provided by the energy accumulator unit to the network, by the control unit, and depending on the values of energy to be produced, which: provides stabilization services by stabilizing the power supplied by the plant to the network; provides capacity sales services by providing frequency regulation and voltage regulation services to the network, and provides energy sale services by transfering the energy between off-peak hours and peak hours, or from hours with saturation of the network to hours without saturation,
**characterized in that** the process further comprises a phase of: for the at least one energy accumulator unit, varying the accumulation capacity devoted to capacity sale services, energy sale services and stabilization services in a simultaneous way depending on the weather forecast

2. Control process according to with claim 1, **characterized in that** it further comprises introducing in the control unit historic values of energy quantity and power stored or delivered by the energy accumulator unit on previous days with similar weather conditions, in order, with these data, to estimate the portion of the energy accumulator unit to be allocated to the stabilization of the power supplied by the plant to the network.

3. Control process according to any of claims 1 or 2, **characterized in that** it further comprises introducing variables regarding market costs of energy and variations in market costs of energy between off-peak hours and peak hours, in the control unit.

4. Control process according to claim 1, **characterized in that** it further comprises the sending of operating instructions from the control unit to the control and actuation units of the generation elements depending on the hourly energy supply program generated.

5. Control process according to claim 3, **characterized in that** it comprises introducing said variables periodically, as they vary, to obtain a new hourly energy supply program in real time for the financial optimization of the energy to be supplied.

6. Control process according to any of claims 1 to 5, **characterized in that** it comprises introducing threshold values of contract demand to be produced, in the control unit.

7. Electrical energy regulation and accumulation process comprising the process in claim 1 and further **characterized in that** it comprises generating an hourly programme of supply of reactive power to the network, depending on the generation capacity available in the generation elements and the at least one energy accumulator unit.

## Patentansprüche

1. Steuerverfahren zur Versorgung und Speicherung von elektrischer Energie, die von einem Kraftwerk zur Erzeugung von erneuerbarer Energie bereitgestellt wird, umfassend:
- Erzeugungselemente für erneuerbare Energie,
- Steuerungs- und Betätigungseinheiten der Erzeugungselemente, die die funktionellen Parameter der Erzeugungselemente messen und darauf einwirken,
- mindestens eine Energiespeichereinheit, die durch einen Satz von individuellen Systemen gebildet ist, die in Reihe und parallel geschaltet sind, und
- mindestens eine Steuereinheit, die mit den Steuerungs- und Betätigungseinheiten der Erzeugungselemente verbunden ist, die das Laden oder Liefern von Leistung durch die Energiespeichereinheit abhängig von den Parametern, die von dem Stromnetz erhalten werden, und von den funktionellen Parametern der Erzeugungselemente reguliert,
wobei das Verfahren folgende Phasen umfasst:
- Bestimmen der Energiemenge-Werte, die von dem Kraftwerk während eines absehbaren Zeitintervalls erzeugt werden sollen, abhängig von den Wetterbedingungen,
- Eingeben dieser Energiemenge-Werte in die Steuereinheit,
- Erzeugen eines stündlichen Programms von Energieversorgung, die durch die Energiespeichereinheit an das Netzwerk bereitgestellt werden soll, durch die Steuereinheit, und abhängig von den Energiewerten, die erzeugt werden sollen, wodurch Folgendes bereitgestellt wird:
Stabilisierungsdienste durch Stabilisieren der Leistung, mit der das Netzwerk durch das Kraftwerk versorgt wird;
Kapazitätvertriebsdienste durch Bereitstellen von Frequenzregulierungs- und Spannungsregulierungsdiensten an das Netzwerk, und
Energievertriebsdienste durch Übertragen der Energie zwischen Zeiten außerhalb der Spitzenzeit und Spitzenzeiten, oder von Zeiten mit Sättigung des Netzwerks bis Zeiten ohne Sättigung,
**dadurch gekennzeichnet, dass** das Verfahren ferner die folgende Phase umfasst:
für die mindestens eine Energiespeichereinheit,
Gleichzeitiges Variieren der Speicherkapazität bezüglich der Kapazitätvertriebsdienste, Energievertriebsdienste und Stabilisierungsdienste, abhängig von der Wettervorhersage.

2. Steuerverfahren nach Anspruch 1, **dadurch gekennzeichnet, dass** es ferner das Eingeben von alten Werten von Energiemenge und Leistung, die von der Energiespeichereinheit an vorangehenden Tagen mit ähnlichen Wetterbedingungen gespeichert oder geliefert wurden, in die Steuereinheit umfasst, um mit diesen Daten den Teil der Energiespeichereinheit zu schätzen, welcher zur Stabilisierung der Energie, mit der das Kraftwerk das Netzwerk versorgt, zugewiesen werden soll.

3. Steuerverfahren nach einem der Ansprüche 1 oder 2, **dadurch gekennzeichnet, dass** es ferner das Eingeben von Variablen bezüglich Energiemarktpreise und Schwankungen in Energiemarktpreisen zwischen Zeiten außerhalb der Spitzenzeit und Spitzenzeiten in die Steuereinheit umfasst.

4. Steuerverfahren nach Anspruch 1, **dadurch gekennzeichnet, dass** es ferner das Senden von Betriebsanweisungen von der Steuereinheit zu der Steuerungs- und Betätigungseinheit der Erzeugungselemente abhängig von dem erzeugten stündlichen Energieversorgungsprogramm umfasst.

5. Steuerverfahren nach Anspruch 3, **dadurch gekennzeichnet, dass** es das Eingeben der Variablen auf einer regelmäßigen Weise umfasst, wenn sie variieren, um ein neues stündliches Echtzeit-Energieversorgungsprogramm für die finanzielle Optimierung der Energie, mit der versorgt werden soll, zu erhalten.

6. Steuerverfahren nach einem der Ansprüche 1 bis 5, **dadurch gekennzeichnet, dass** es das Eingeben von Schwellenwerten der vertraglich festgelegten Nachfrage, die hergestellt werden soll, in die Steuereinheit umfasst.

7. Verfahren zur Regulierung und Speicherung von elektrischer Energie, das das Verfahren nach Anspruch 1 umfasst, und ferner **dadurch gekennzeichnet, dass** es das Erzeugen eines stündlichen Programms von Blindleistungsversorgung an das Netzwerk abhängig von der Erzeugungskapazität, die in den Erzeugungselementen vorhanden ist, und der mindestens einen Energiespeichereinheit umfasst.

## Revendications

1. Processus de contrôle de l'approvisionnement et de l'accumulation d'énergie électrique fournie par une centrale de production d'énergie renouvelable :
- des éléments de production d'énergie renouvelable,
- des unités de contrôle et d'actionnement des éléments de production, qui mesurent les paramètres fonctionnels des éléments de production et agissent sur ceux-ci,
- au moins une unité accumulatrice d'énergie formée par un ensemble de systèmes individuels qui sont raccordés en série et en parallèle, et
- au moins une unité de contrôle, raccordée à des unités de contrôle et d'actionnement des éléments de production, qui régule l'unité accumulatrice d'énergie chargeant ou délivrant de la puissance en fonction des paramètres reçus du réseau d'électricité et des paramètres fonctionnels des éléments de production,
dans lequel le processus comprend les phases consistant à :
- déterminer les valeurs de quantité d'énergie à produire par la centrale pendant un intervalle de temps futur proche, en fonction des conditions météorologiques,
- introduire ces valeurs de quantité d'énergie, dans l'unité de contrôle,
- produire un programme horaire d'approvisionnement en énergie à fournir par l'unité accumulatrice d'énergie au réseau, par l'unité de contrôle, et en fonction des valeurs d'énergie à produire, qui :
fournit des services de stabilisation en stabilisant la puissance fournie par la centrale au réseau ;
fournit des services de vente de capacité en fournissant une régulation de fréquence et des services de régulation de tension au réseau, et fournit des services de vente d'énergie en transférant l'énergie entre les heures creuses et les heures de pointe, ou des heures avec une saturation du réseau aux heures sans saturation,
**caractérisé en ce que** le processus comprend en outre une phase consistant à :
pour la au moins une unité accumulatrice d'énergie, varier la capacité d'accumulation consacrée aux services de vente de capacité, des services de vente d'énergie et des services de stabilisation de façon simultanée en fonction des prévisions météorologiques.

2. Processus de contrôle selon la revendication 1, **caractérisé en ce qu'**il comprend en outre l'introduction dans l'unité de contrôle de valeurs historiques de quantité d'énergie et de puissance stockée ou délivrée par l'unité accumulatrice d'énergie les jours précédents avec des conditions météorologiques similaires, afin, avec ces données, d'estimer la partie de l'unité accumulatrice d'énergie à attribuer à la stabilisation de la puissance fournie par la centrale au réseau.

3. Processus de contrôle selon l'une quelconque des revendications 1 ou 2, **caractérisé en ce qu'**il comprend en outre l'introduction de variables relatives aux coûts du marché de l'énergie et de variations dans les coûts du marché de l'énergie entre les heures creuses et les heures de pointe, dans l'unité de contrôle.

4. Processus de contrôle selon la revendication 1, **caractérisé en ce qu'**il comprend en outre l'envoi d'instructions de fonctionnement de l'unité de contrôle aux unités de contrôle et d'actionnement des éléments de production en fonction du programme horaire d'approvisionnement en énergie généré.

5. Processus de contrôle selon la revendication 3, **caractérisé en ce qu'**il comprend l'introduction desdites variables périodiquement, étant donné qu'elles varient, pour obtenir un nouveau programme horaire d'approvisionnement en énergie en temps réel pour l'optimisation financière de l'énergie à fournir.

6. Processus de contrôle selon l'une quelconque des revendications 1 à 5, **caractérisé en ce qu'**il comprend l'introduction de valeurs seuil de demande contractuelle à produire, dans l'unité de contrôle.

7. Régulation d'énergie électrique et processus d'accumulation comprenant le processus selon la revendication 1 et en outre
**caractérisée en ce qu'**elle comprend la production d'un programme horaire d'approvisionnement de puissance réactive au réseau, en fonction de la capacité de production disponible dans les éléments de production et de la au moins une unité accumulatrice.
